# EUROPEAN PATENT APPLICATION

(11) **EP 4 775 433 A1**
(43) Date of publication of application: **15.07.2026**
(21) Application number: 26151698.3
(22) Date of filing: 13.01.2026
(51) Int. Cl.: B60L 3/00, B60L 3/04, E02F 3/32, E02F 9/20, E02F 9/24, F16P 3/10, F16P 7/02

(54) **CONTROL METHOD FOR WORK MACHINE, CONTROL SYSTEM, AND WORK MACHINE**

(30) Priority: 14.01.2025 JP 2025005032
(71) Applicant: Yanmar Holdings Co., Ltd., Osaka-shi, Osaka (JP)
(72) Inventor: ONITSUKA, Kosuke, Chikugo-shi (JP)
(74) Representative: Sekiguchi, Kazuya

(57) **Abstract**

Occurrence of an accident during access to an accessed portion is prevented. A control method for a work machine 100 that uses an electric motor 2 to be supplied with electric power from a battery unit 1 as a drive source includes: allowing access to a predetermined accessed portion 101 by releasing a lock mechanism 5; and rendering the electric motor 2 in a non-drivable state while the lock mechanism 5 is in a released state.

## Description

### TECHNICAL FIELD

The present invention relates to a control method for a work machine, a control system, and a work machine.

### BACKGROUND ART

Hitherto, an electric work machine including a battery that can be charged from an external power source has been known. For example, the work machine of Patent Document 1 performs traveling drive by a lower traveling body and revolving drive of an upper revolving body with electric power supplied from a storage battery (battery). Further, the storage battery is charged by connecting a power cable from the external power source when the remaining battery capacity is reduced to a level that requires recharging. In the work machine of Patent Document 1, the traveling drive, the revolving drive, and the like can be performed even during charging operation of the storage device.

### PRIOR ART DOCUMENT

### PATENT DOCUMENT

Patent Document 1: JP2009-215855 A

### SUMMARY OF INVENTION

### TECHNICAL PROBLEM

However, in Patent Document 1, there is a risk that an accident occurs during access to a connector (accessed portion) of the storage battery. For example, in the work machine of Patent Document 1, drive such as traveling and revolving drive can be performed while the power cable is connected to the connector. Accordingly, there is a risk that the lower traveling body steps on the power cable to damage the power cable. Further, there is a risk that tension acts on the power cable due to the movement of the work machine during traveling, the revolving operation of the upper revolving body, and the like to damage the connector of the storage battery, the power cable and a connection plug, and the like. Further, there is a risk that, while the power cable is electrically connected to one of the connector of the storage battery and the external power source, an end portion of the power cable or the connection plug is detached from the other thereof. In this case, the end portion of the power cable or the connection plug becomes a free end, and freely moves in accordance with the drive of the work machine. Accordingly, there is a risk of occurrence of an accident such as an electric shock.

The present invention has been made in view of the above-mentioned situations, and has an object to prevent occurrence of an accident during access to an accessed portion.

### SOLUTION TO PROBLEM

In order to achieve the above-mentioned object, a control method according to one aspect of the present invention is a control method for a work machine that uses an electric motor to be supplied with electric power from a battery unit as a drive source. The control method includes: allowing access to a predetermined accessed portion by releasing a lock mechanism; and rendering the electric motor in a non-drivable state while the lock mechanism is in a released state.

Further, in order to achieve the above-mentioned object, a control system according to one aspect of the present invention carries out the above-mentioned control method. The control system includes a detection unit and a control unit. The detection unit detects whether a lock mechanism is in a locked state or a released state. The control unit brings an electric motor to a non-drivable state when the detection unit detects releasing of the lock mechanism.

Further, in order to achieve the above-mentioned object, a work machine according to one aspect of the present invention includes the above-mentioned control system.

Further features and advantages of the present invention are made clearer by an embodiment described below.

### ADVANTAGEOUS EFFECTS OF INVENTION

With the present invention, it is possible to prevent occurrence of an accident during access to the accessed portion.

### BRIEF DESCRIPTION OF DRAWINGS

FIG. 1 is a schematic side view illustrating a configuration example of a hydraulic excavator according to the present embodiment;
FIG. 2 is a block diagram schematically illustrating configurations of an electrical system and a hydraulic system of the hydraulic excavator;
FIG. 3 is a perspective view of an upper revolving body in a state in which a cover member is closed;
FIG. 4 is a perspective view of the upper revolving body in a state in which the cover member is opened;
FIG. 5A is a schematic view of a lock mechanism in a locked state;
FIG. 5B is a schematic view of the lock mechanism in a released state; and
FIG. 6 is an explanatory flow chart of an example of drive control for the hydraulic excavator.

### DESCRIPTION OF EMBODIMENTS

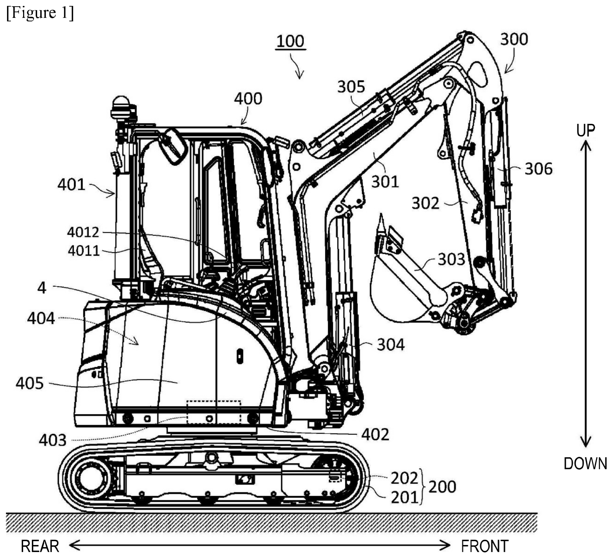

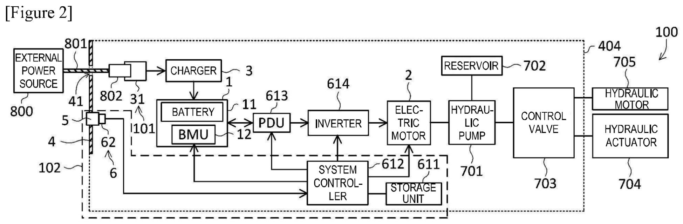

Hereinafter, an embodiment of the present invention is described with reference to the drawings. FIG. 1 is a schematic side view illustrating a configuration example of a hydraulic excavator 100 according to the present embodiment. FIG. 2 is a block diagram schematically illustrating configurations of an electrical system and a hydraulic system of the hydraulic excavator 100. The hydraulic excavator 100 is an example of a "work machine" of the present invention.

### <1. Hydraulic excavator 100>

The hydraulic excavator 100 includes a lower traveling body 200, a work implement 300, and an upper revolving body 400. It is to be noted that, in the present embodiment, the upper revolving body 400 is generally referred to as a "machine body".

It is to be noted that directions in the present disclosure are defined as follows. First, in the upper revolving body 400, a direction from one side toward the other side of a front side and a back side of a driver's seat 4011, described later, on which an operator (operating person, driver) sits is defined as "front-rear direction". In the "front-rear direction", the orientation from the back side to the front side of the driver's seat 4011 is defined as "forward", and the orientation from the front side to the back side of the driver's seat 4011 is defined as "rearward". Accordingly, in a state in which the upper revolving body 400 does not revolve (revolving angle of 0°) with respect to the lower traveling body 200, the front-rear direction of the upper revolving body 400 matches a direction in which the lower traveling body 200 moves forward and rearward.

Further, in a state viewed forward from the rear side, a direction from one side toward the other side of the left side and the right side of the driver's seat 4011 is defined as a "right-left direction". In the right-left direction, the orientation to the left side of the driver's seat 4011 is defined as "leftward", and the orientation to the right side of the driver's seat 4011 is defined as "rightward".

Further, a direction from one toward the other of the lower traveling body 200 and the upper revolving body 400 is defined as an "up-down direction". In the up-down direction, the orientation directed from the lower traveling body 200 to the upper revolving body 400 is defined as "upward", and the orientation directed from the upper revolving body 400 to the lower traveling body 200 is defined as "downward". Accordingly, at the time of disposing the hydraulic excavator 100 on a horizontal plane having a normal direction in the vertical direction, in the hydraulic excavator 100, the up-down direction matches the vertical direction. Moreover, upward matches vertically upward, and downward matches vertically downward.

The front-rear direction, the right-left direction, and the up-down direction are perpendicular to each other.

However, the definitions of the directions described above are only used for description, and are not intended to limit actual positional relationships and directions.

### <1-1. Lower traveling body 200>

The lower traveling body 200 includes a pair of right and left crawlers 201, and a pair of right and left traveling motors 202. Each of the traveling motors 202 is a hydraulic motor. The hydraulic excavator 100 can move forward and rearward in the front-rear direction when the right and left traveling motors 202 respectively drive the right and left crawlers 201.

### <1-2. Work implement 300>

The work implement 300 includes a boom 301, an arm 302, and a bucket 303. Excavation work for earth and sand can be performed by independently driving the boom 301, the arm 302, and the bucket 303. The boom 301 is pivoted by a boom cylinder 304. The boom cylinder 304 has a proximal end portion supported by a front portion of the upper revolving body 400, and can move in an extendable/contractible manner. The arm 302 is pivoted by an arm cylinder 305. The arm cylinder 305 has a proximal end portion supported by the boom 301, and can move in an extendable/contractible manner. The bucket 303 is pivoted by a bucket cylinder 306. The bucket cylinder 306 has a proximal end portion supported by the arm 302, and can move in an extendable/contractible manner. The boom cylinder 304, the arm cylinder 305, and the bucket cylinder 306 are constituted by hydraulic cylinders.

### <1-3. Upper revolving body 400>

The upper revolving body 400 is positioned above the lower traveling body 200, and is provided to be revolvable via a revolving bearing (not shown) with respect to the lower traveling body 200. The upper revolving body 400 includes an operating section 401, a machine body frame 402, a revolving motor 403, an engine room 404, and a hood 405. The driver's seat 4011 is disposed in the operating section 401. Various levers 4012 are disposed around the driver's seat 4011. When the operator sits on the driver's seat 4011 and operates the lever 4012, a hydraulic actuator 704 (see FIG. 2) is driven. This makes it possible for the hydraulic excavator 100 to perform traveling of the lower traveling body 200, excavation work by the work implement 300, revolving of the upper revolving body 400, and the like. The machine body frame 402 has a plate shape expanding perpendicularly to the up-down direction. On the machine body frame 402, the operating section 401, the revolving motor 403, and various pieces of equipment to be mounted in the engine room 404 are mounted. The engine room 404 is present inside of the machine body. The hood 405 is a casing having the engine room 404 provided therein, and is disposed below the operating section 401. The hood 405 covers the engine room 404 together with a step of the operating section 401, the machine body frame 402, a cover member 4 to be described later, and the like. The upper revolving body 400 is driven by the revolving motor 403 to revolve via the revolving bearing. It is to be noted that the revolving motor 403 is a hydraulic motor in the present embodiment, but is not limited to this example, and may be an electric motor.

Further, the upper revolving body 400 further includes a battery unit 1, an electric motor 2, a charger 3, a storage unit 611, a system controller 612, a PDU (power drive unit) 613, and an inverter 614. Further, the upper revolving body 400 further includes a hydraulic pump 701, a reservoir 702, a control valve 703, a hydraulic actuator 704, and a hydraulic motor 705. All of those are accommodated in the engine room 404.

It is to be noted that the hydraulic excavator 100 may be configured to use both of hydraulic equipment such as the hydraulic actuator 704 and an actuator to be driven by electric power. Examples of the actuator to be driven by electric power include an electric traveling motor, an electric cylinder, and an electric revolving motor.

### <1-3-1. Configuration of electrical system>

The battery unit 1 supplies electric power to components that require electric power of the hydraulic excavator 100. The battery unit 1 includes a battery 11 and a BMU (battery management unit) 12. The battery 11 is, for example, a rechargeable secondary battery such as a lithium-ion battery. The BMU 12 is a battery control unit that monitors and controls the battery 11. For example, the BMU 12 measures a voltage, a temperature, and the like of the battery 11, and outputs the result to the system controller 612. Further, the BMU 12 controls the battery 11 based on a control signal output from the system controller 612.

The electric motor 2 is constituted by a permanent magnet motor, an induction motor, or the like, and drives the hydraulic pump 701. The electric motor 2 receives supply of electric power from the battery unit 1 via the PDU 613 and the inverter 614. The electric motor 2 is supported on the machine body frame 402 via an anti-vibration support member.

The charger 3 converts an AC voltage supplied from an external power source 800 via a power supply cable 801 into a DC voltage, and supplies the DC voltage to the battery unit 1. In detail, one end portion of the power supply cable 801 is electrically connected to the external power source 800. A power supply plug 802 is disposed at another end portion of the power supply cable 801. Meanwhile, the charger 3 includes a charging connector 31. The charging connector 31 can be connected to the power supply plug 802 in an attachable/detachable manner. It is to be noted that, in the present disclosure, attachable/detachable means detachable and attachable. The charging connector 31 is connected to the power supply plug 802 to be electrically connected to the power supply cable 801. In this manner, the battery unit 1 can be charged.

The inverter 614 converts the DC voltage supplied from the battery unit 1 via the PDU 613 into an AC voltage, and supplies the AC voltage to the electric motor 2. This rotates the electric motor 2. The AC voltage (current) is supplied from the inverter 614 to the electric motor 2 based on a rotation instruction output from the system controller 612.

The PDU 613 is a power output unit that controls the battery unit 1, and controls an internal battery relay to control input/output of electric power in the battery unit 1. As in the present embodiment, the PDU 613 is preferably disposed forward of the battery unit 1. As a result, a power source unit including the battery unit 1, the PDU 613, and the like can be optimally configured. Moreover, the PDU 613 having a high voltage can be disposed in a part having small risk of damage even when an obstacle collides during work of the upper revolving body 400.

The storage unit 611 is a non-transitory storage medium that retains memory even when power supply is stopped. The storage unit 611 stores various programs and information to be used in each component (for example, the system controller 612) of the hydraulic excavator 100.

The system controller 612 is an electronic control unit called an ECU. The system controller 612 controls a component requiring control in the hydraulic excavator 100, based on the programs and information stored in the storage unit 611. For example, as illustrated in FIG. 2, the system controller 612 controls the electric motor 2, the BMU 12, the inverter 614, and the like.

### <1-3-2. Configuration of hydraulic system>

The hydraulic pump 701 is driven by the electric motor 2 to supply hydraulic oil supplied from the reservoir 702 that accommodates (stores) the hydraulic oil to the control valve 703. The reservoir 702 is a working oil tank that accommodates (stores) the hydraulic oil. The control valve 703 includes a plurality of directional control valves, and controls passage (flow direction, flow rate, and the like) of working oil pumped from the hydraulic pump 701. For example, the control valve 703 supplies the working oil to the hydraulic actuator 704, the hydraulic motor 705, and the like. The hydraulic actuator 704 includes, for example, the boom cylinder 304, the arm cylinder 305, the bucket cylinder 306, and the like. The hydraulic motor 705 includes, for example, the right and left traveling motors 202, the revolving motor 403, and the like.

### <1-3-3. Lock mechanism 5 of cover member 4>

Further, the upper revolving body 400 of the hydraulic excavator 100 further includes the cover member 4, a lock mechanism 5, and a detection unit 6 (see FIG. 1, FIG. 2, etc.). It is to be noted that the lock mechanism 5 and the detection unit 6 configure the control system 102 together with the storage unit 611, the system controller 612, and the like.

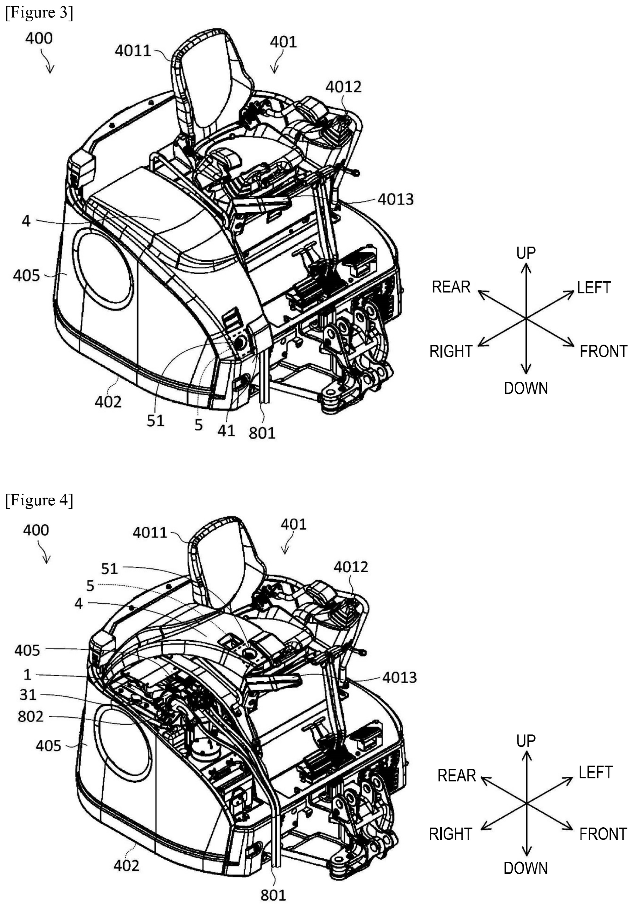

The cover member 4 is a part of the casing of the machine body covering the engine room 404, and is connected in an openable/closable manner to the hood 405. FIG. 3 is a perspective view of the upper revolving body 400 in a state in which the cover member 4 is closed. FIG. 4 is a perspective view of the upper revolving body 400 in a state in which the cover member 4 is opened. It is to be noted that FIG. 3 and FIG. 4 omit illustration of a part of the upper revolving body 400 (for example, a housing of an operator's cab surrounding the driver's seat 4011, etc.) in order to facilitate the understanding of the configuration. As illustrated in FIG. 3 and FIG. 4, the cover member 4 covers the charging connector 31 in the closed state. It is to be noted that, in the present embodiment, the charging connector 31 is an example of an "accessed portion (101)" of the present invention. However, this example does not exclude a configuration in which the accessed portion 101 is not the charging connector 31. For example, the accessed portion 101 is only required to be a component disposed inside of the machine body (for example, in the engine room 404). This makes it possible to prevent easy access to the accessed portion 101 as compared to a case in which the accessed portion 101 is disposed outside of the machine body. Accordingly, it is possible to more effectively prevent occurrence of an accident during access to the accessed portion 101.

The cover member 4 includes an opening portion 41 through which the power supply cable 801 is insertable (see FIG. 2). The opening portion 41 connects the inside (for example, the engine room 404) and the outside of the machine body. In the present embodiment, the opening portion 41 is a recessed portion disposed at a lower end portion of the cover member 4. The recessed portion is recessed outward of the machine body. That is, a lower end portion of a bottom surface of the recessed portion is positioned outside of the machine body with respect to the hood 405. This makes the lower end portion of the recessed portion opened to the outside of the machine body. It is to be noted that the mode of the opening portion 41 is not limited to this example. The opening portion 41 is not required to be the above-mentioned recessed portion, and is not required to be disposed at the lower end portion of the cover member 4. For example, the opening portion 41 may be a through hole passing through the cover member 4 from one of the front surface and the back surface to the other thereof. Further, the opening portion 41 is only required to have a size through which the power supply cable 801 is insertable.

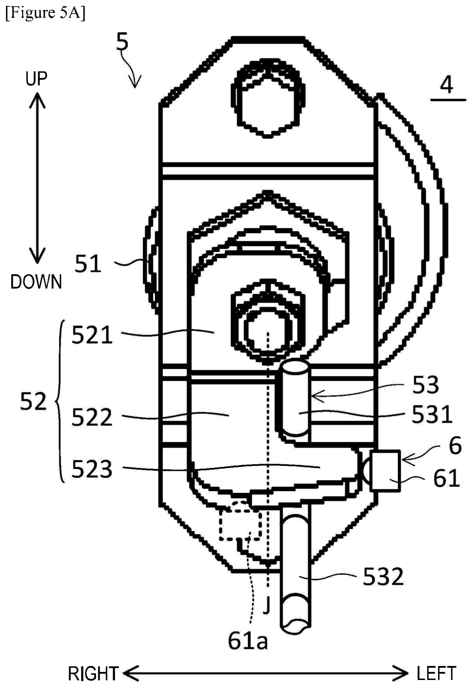

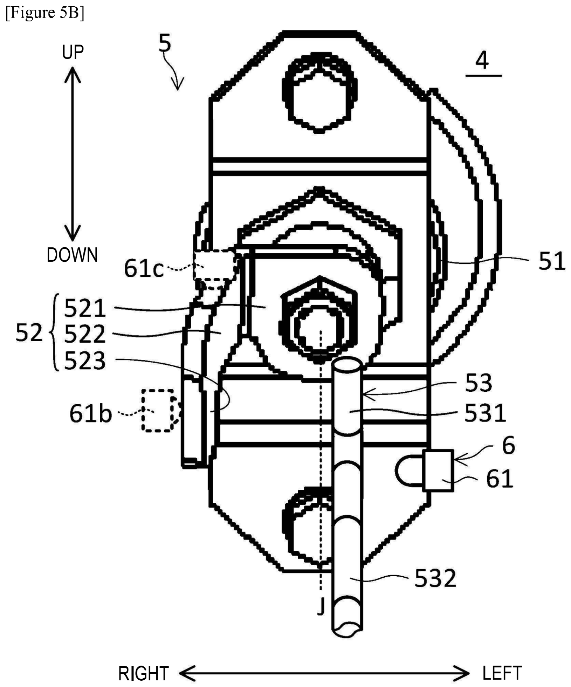

The lock mechanism 5 is disposed on the cover member 4, and can lock the cover member 4 in a closed state with respect to the hood 405. FIG. 5A and FIG. 5B are schematic views of the lock mechanism 5 as viewed from the inner side of the cover member 4. FIG. 5A is a schematic view of the lock mechanism 5 in a locked state. FIG. 5B is a schematic view of the lock mechanism 5 in a released state.

As illustrated in FIG. 5A and FIG. 5B, the lock mechanism 5 is configured to include a key cylinder 51, a hook 52, and an engagement member 53. The key cylinder 51 is a locking device for the cover member 4, and switches a locked state (lock) and a released state (unlock) of the cover member 4 in accordance with a rotation operation of a key inserted from a front keyhole (not shown). The hook 52 can rotate about an axis J in conjunction with the above-mentioned rotation operation of the key. It is to be noted that the axis J may be a rotary axis in the above-mentioned rotation operation of the key, or may be an axis parallel with the rotary axis. The engagement member 53 is fixed to any one of the machine body frame 402, the hood 405, and a member arranged in the engine room 404, and can be engaged with the hook 52.

When bringing the lock mechanism 5 to the locked state, the hook 52 rotates in one circumferential direction about the axis J and engages with the engagement member 53 as illustrated in FIG. 5A. As a result, the hook 52 catches on the engagement member 53 at the time when the cover member 4 is attempted to be opened, and hence the cover member 4 can be prevented from being pivoted and opened.

Meanwhile, when bringing the lock mechanism 5 to the released state, the hook 52 rotates in the opposite circumferential direction about the axis J and disengages from the engagement member 53 as illustrated in FIG. 5B. As a result, the hook 52 does not catch on the engagement member 53 at the time when the cover member 4 is attempted to be opened, and hence the cover member 4 can be pivoted and opened.

For example, in the present embodiment, as illustrated in FIG. 5A and FIG. 5B, the hook 52 includes a proximal portion 521, an extending portion 522, and a distal end portion 523. The proximal portion 521 is a plate-shaped member expanding in a direction intersecting with the axis J, and is disposed on the back surface of the cover member 4. The extending portion 522 extends in a direction parallel with at least the axis J from an externally extending portion of the proximal portion 521. The distal end portion 523 extends from the distal end of the extending portion 522 in a direction perpendicular to the axis J and a radial direction with respect to the axis J (or a circumferential direction about the axis J).

Further, the engagement member 53 includes an L-shaped part. For example, the engagement member 53 includes a support portion 531 and a bent portion 532. The support portion 531 extends in a direction parallel with at least the axis J to support the bent portion 532. The bent portion 532 extends in a direction that is bent from the distal end of the support portion 531 (for example, upward). When the hook 52 is engaged with the engagement member 53, the distal end portion 523 is caught by the bent portion 532 (see FIG. 5A).

An outer edge of the distal end portion 523 on the cover member 4 side preferably extends to come close to the cover member 4 side as separating away from the extending portion 522, that is, is tilted to the cover member 4 side as separating away from the extending portion 522. In this manner, when the hook 52 is engaged with the engagement member 53, the distal end portion 523 can be more reliably and stably caught with respect to the bent portion 532.

Next, the detection unit 6 detects whether the lock mechanism 5 is in the locked state or the released state. In the present embodiment, the detection unit 6 includes a limit switch 61. The limit switch 61 detects the contact with the hook 52, and outputs the detection result to the system controller 612. The limit switch 61 is fixed to any one of the machine body frame 402, the hood 405, and a member disposed in the engine room 404.

In the present embodiment, the limit switch 61 is disposed at a position at which the limit switch 61 comes into contact with the hook 52 when bringing the lock mechanism 5 to the locked state. For example, in FIG. 5A and FIG. 5B, the limit switch 61 is disposed on the left side of the bent portion 532 of the engagement member 53.

When bringing the lock mechanism 5 to the locked state, as illustrated in FIG. 5A, the hook 52, which rotates in one circumferential direction, comes into contact with the limit switch 61 and presses the limit switch 61 with its distal end portion 523. In accordance therewith, the limit switch 61 outputs a detection signal indicating pressing by the hook 52 to the system controller 612. Meanwhile, when bringing the lock mechanism 5 to the released state, the hook 52, which rotates in the opposite circumferential direction, is separated from the limit switch 61 and no longer presses the limit switch 61. Accordingly, the limit switch 61 stops the output of the detection signal described above with respect to the system controller 612. Alternatively, the limit switch 61 may output a signal indicating that the pressing by the hook 52 is not detected to the system controller 612.

It is to be noted that, in FIG. 5A, when bringing the lock mechanism 5 to the released state, the limit switch 61 comes into contact with the distal end of the distal end portion 523. However, the arrangement of the limit switch 61 is not limited to this example.

For example, the limit switch 61 may be disposed at a position at which, when bringing the lock mechanism 5 to the released state, the limit switch 61 comes into contact with an outer edge of the distal end portion 523 on a side opposite to the cover member 4, as illustrated by a limit switch 61 indicated by the broken line of FIG. 5A. Alternatively, the limit switch 61 may be disposed at a position at which, when bringing the lock mechanism 5 to the released state, the limit switch 61 comes into contact with a radially outer end surface (lower surface in FIG. 5A) of the distal end portion 523 with respect to the axis J. Further, in those cases, the limit switch 61 may be disposed on the right side of the bent portion 532.

Alternatively, without being limited to the above-mentioned examples, the limit switch 61 may be disposed at a position at which, when bringing the lock mechanism 5 to the released state, the limit switch 61 comes into contact with and pressed by the hook 52, which rotates in the opposite circumferential direction.

For example, the limit switch 61 may be disposed at a position at which, when bringing the lock mechanism 5 to the released state, the limit switch 61 comes into contact with a radially outer end surface (right surface in FIG. 5B) of the distal end portion 523 with respect to the axis J, as illustrated by a limit switch 61b indicated by the broken line of FIG. 5B. Alternatively, the limit switch 61 may be disposed at a position at which, when bringing the lock mechanism 5 to the released state, the limit switch 61 comes into contact with an upper end portion of the extending portion 522, as illustrated by a limit switch 61c indicated by the broken line of FIG. 5B. Alternatively, the limit switch 61 may be disposed at a position at which, when bringing the lock mechanism 5 to the released state, the limit switch 61 comes into contact with the right surface of the extending portion 522.

In those cases, the limit switch 61 outputs a detection signal indicating pressing by the hook 52 to the system controller 612 in accordance with the contact with the hook 52 when bringing the lock mechanism 5 to the released state. Meanwhile, when bringing the lock mechanism 5 to the locked state, the hook 52, which rotates in one circumferential direction, is separated from the limit switch 61 and no longer presses the limit switch 61. Accordingly, the limit switch 61 stops the output of the detection signal described above with respect to the system controller 612. Alternatively, the limit switch 61 may output a signal indicating that the pressing by the hook 52 is not detected to the system controller 612.

### <1-4. Drive control of hydraulic excavator 100>

Next, the hydraulic excavator 100 uses the electric motor 2 to be supplied with electric power from the battery unit 1 as the drive source. In the hydraulic excavator 100, with the lock mechanism 5 being released, access can be made to a predetermined accessed portion 101. Moreover, when the lock mechanism 5 is in the released state, the electric motor 2 is brought to a non-drivable state.

In this manner, when the lock mechanism 5 is in the released state, drive such as traveling and revolving drive of the hydraulic excavator 100 is prevented. This makes it possible to prevent occurrence of an accident during access to the accessed portion 101. For example, a member that makes access to the accessed portion 101 is not affected by the drive of the hydraulic excavator 100, and hence damage of the accessed portion 101, the member, or the like can be prevented. Further, it is possible to prevent the drive such as traveling and revolving of the hydraulic excavator 100 from affecting a worker who makes access to the accessed portion 101. For example, it is possible to prevent a contact accident, an electric shock accident to be described later, and the like of a worker due to the above-mentioned drive of the hydraulic excavator 100.

It is to be noted that, in the present embodiment, the access to the accessed portion 101 includes connecting the power supply cable 801 to the charging connector 31 for charging the battery unit 1. That is, the accessed portion 101 may be the charging connector 31. Further, the member that makes access to the accessed portion 101 may be the power supply cable 801 (or the power supply plug 802). However, this example does not exclude a configuration in which the accessed portion 101 is not the charging connector 31 and a configuration in which the member that makes access to the accessed portion 101 is not the power supply cable 801 (or the power supply plug 802).

In the present embodiment, when the lock mechanism 5 is in the released state, drive such as traveling and revolving drive of the hydraulic excavator 100 is prevented. This makes it possible to prevent occurrence of an accident during access to the charging connector 31 or the end portion of the power supply cable 801 (or the power supply plug 802). For example, when the charging connector 31 is connected to the end portion of the power supply cable 801 (or the power supply plug 802), the above-mentioned drive of the hydraulic excavator 100 is prevented. This makes it possible to prevent the power supply cable 801 from being stepped on by traveling or a tension from acting on the power supply cable 801 in accordance with traveling, revolving, and the like. Further, it is possible to prevent occurrence of an accident with a worker or the like due to drive such as traveling and revolving of the hydraulic excavator 100. For example, it is possible to prevent a contact accident between the hydraulic excavator 100 and a worker, an electric shock accident of the worker due to contact with the charging connector 31 or the end portion of the power supply cable 801 (or the power supply plug 802), and the like. Accordingly, it is possible to prevent occurrence of an accident during charging work of the battery unit 1.

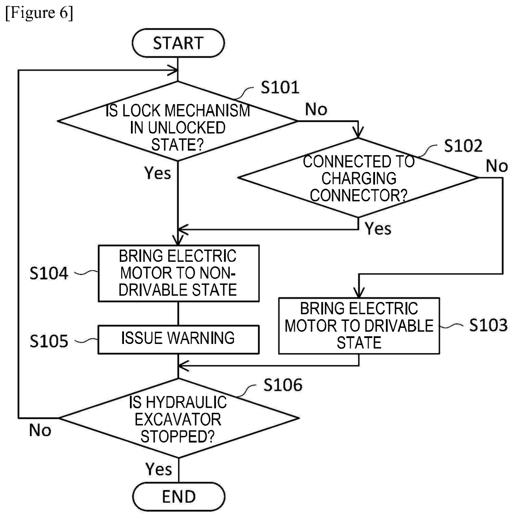

Hereinafter, an example of the above-mentioned drive control of the hydraulic excavator 100 is described. FIG. 6 is an explanatory flow chart of an example of the drive control of the hydraulic excavator 100. It is to be noted that the processing of FIG. 6 is started together with the drive start of the hydraulic excavator 100.

First, the system controller 612 determines whether, based on the detection result from the detection unit 6, the lock mechanism 5 is in a locked (lock) state or a released (unlock) state (step S101).

When the lock mechanism 5 is in the locked (lock) state (No in step S101), the system controller 612 determines whether or not the end portion of the power supply cable 801 (power supply plug 802) is connected to the charging connector 31 (step S102). When the end portion of the power supply cable 801 (power supply plug 802) is not connected (No in step S102), the system controller 612 brings the electric motor 2 to a drivable state (step S103). Then, the processing of FIG. 6 proceeds to step S106.

Meanwhile, when the lock mechanism 5 is in the released (unlock) state (Yes in step S101), and when the end portion of the power supply cable 801 (power supply plug 802) is connected to the charging connector 31 even when the lock mechanism 5 is in the locked (lock) state (Yes in step S102), the system controller 612 brings the electric motor 2 to the non-drivable state (step S104). It is to be noted that means for bringing the electric motor 2 to the non-drivable state is not particularly limited. For example, the system controller 612 may control the electric motor 2 so that the rotational speed of the electric motor 2 becomes 0, or may stop the power supply of the electric motor 2. Alternatively, with a stop member that is not illustrated, rotation of the output shaft of the electric motor 2 may be stopped.

Moreover, the system controller 612 may issue a warning (step S105). For example, the system controller 612 may cause a display unit 4013 (see FIG. 3 and FIG. 4) disposed in the operating section 401 to carry out warning display, or output a sound for warning from a sound output unit that is not illustrated. Then, the processing of FIG. 6 proceeds to step S106.

Next, when the drive of the hydraulic excavator 100 is not stopped (No in step S106), the processing of FIG. 6 returns to step S101. Meanwhile, when the drive of the hydraulic excavator 100 is stopped (Yes in step S106), the processing of FIG. 6 is ended.

### <2. Remarks>

The embodiment of the present invention has been described above. It is to be noted that the above-mentioned embodiment is an example, and it should be understood by those skilled in the art that the components and processes of the embodiment can be combined into various modifications and that those also fall within the scope of the invention.

### <3. Summary>

Hereinafter, the embodiment described so far is summarized.

For example, a control method disclosed in this specification is a control method for a work machine 100 that uses an electric motor 2 to be supplied with electric power from a battery unit 1 as a drive source, the control method having a configuration (first configuration) including:
allowing access to a predetermined accessed portion 101 by releasing a lock mechanism 5; and
rendering the electric motor 2 in a non-drivable state while the lock mechanism 5 is in a released state.

The control method having the above-mentioned first configuration may have a configuration (second configuration) in which the access to the accessed portion 101 includes connecting a power supply cable 801 to a charging connector 31 for charging the battery unit 1.

Further, the control method having the above-mentioned second configuration may further have a configuration (third configuration) in which, when the power supply cable 801 is in a state of being connected to the charging connector 31, the electric motor 2 is in the non-drivable state.

Further, the control method having any one of the above-mentioned first to third configurations may have a configuration (fourth configuration) in which the accessed portion 101 is disposed inside of a machine body.

Further, the control method having any one of the above-mentioned first to fourth configurations may further have a configuration (fifth configuration) in which:
the accessed portion 101 is covered in an openable/closable manner with a cover member 4 on which the lock mechanism 5 is disposed; and
a member that makes access to the accessed portion 101 (for example, the power supply cable 801) passes through an opening portion 41 of the cover member 4.

Further, the control system 102 disclosed in this specification is a control system 102 that carries out the control method having any one of the above-mentioned first to fifth configurations, and has a configuration (sixth configuration) including:
a detection unit 6 that detects whether a lock mechanism 5 is in a locked state or a released state; and
a control unit 612 that brings an electric motor 2 to a non-drivable state when the detection unit 6 detects releasing of the lock mechanism 5.

Further, the control system 102 having the above-mentioned sixth configuration may have a configuration (seventh configuration) in which:
the accessed portion 101 includes a charging connector 31 for charging the battery unit 1; and
the charging connector 31 is connectable to a power supply cable 801.

Further, the work machine 100 disclosed in this specification has a configuration (eighth configuration) including the control system 102 having the above-mentioned sixth or seventh configuration.

Further, the work machine 100 having the above-mentioned eighth configuration may have a configuration (ninth configuration) in which:
the work machine 100 further includes the lock mechanism 5 and a cover member 4 that covers the accessed portion 101 in an openable/closable manner; and
the cover member 4 includes an opening portion 41 through which a member that makes access to the accessed portion 101 (for example, the power supply cable 801) passes.

### INDUSTRIAL APPLICABILITY

The present invention is applicable to, for example, a work machine such as a construction machine or an agricultural machine.

### REFERENCE SIGNS LIST

100···hydraulic excavator (work machine), 101···accessed portion, 102···control system, 200···lower traveling body, 201···crawler, 202···traveling motor, 300···work implement, 301···boom, 302···arm, 303···bucket, 304···boom cylinder, 305···arm cylinder, 306···bucket cylinder, 400···upper revolving body, 401···operating section, 4011···driver's seat, 4012···lever, 402···machine body frame, 403···revolving motor, 404···engine room, 405···hood, 611···storage unit, 612···system controller (control unit), 613···PDU, 623···inverter, 701···hydraulic pump, 702···reservoir, 703···control valve, 704···hydraulic actuator, 707···hydraulic motor, 800···external power source, 801···power supply cable, 802···power supply plug, 1···battery unit, 11···battery, 12···BMU, 2···electric motor, 3···charger, 31···charging connector, 4···cover member, 41···opening portion, 5···lock mechanism, 51···key cylinder, 52···hook, 521···proximal portion, 522···extending portion, 523···distal end portion, 53···engagement member, 531···support portion, 532···bent portion, 6···detection unit, 61, 61a, 61b, 61c···limit switch, J··axis

## Claims

1. A control method for a work machine that uses an electric motor to be supplied with electric power from a battery unit as a drive source, the control method comprising:
allowing access to a predetermined accessed portion by releasing a lock mechanism; and
rendering the electric motor in a non-drivable state while the lock mechanism is in a released state.

2. The control method according to claim 1, wherein the access to the accessed portion includes connecting a power supply cable to a charging connector for charging the battery unit.

3. The control method according to claim 2, wherein, when the power supply cable is in a state of being connected to the charging connector, the electric motor is in the non-drivable state.

4. The control method according to claim 1, wherein the accessed portion is disposed inside of a machine body.

5. The control method according to claim 1, wherein:
the accessed portion is covered in an openable/closable manner with a cover member on which the lock mechanism is disposed; and
a member that makes access to the accessed portion passes through an opening portion of the cover member.

6. A control system that carries out the control method according to any one of claims 1 to 5, the control system comprising:
a detection unit that detects whether a lock mechanism is in a locked state or a released state; and
a control unit that brings an electric motor to a non-drivable state when the detection unit detects releasing of the lock mechanism.

7. The control system according to claim 6, wherein:
the accessed portion includes a charging connector for charging the battery unit; and
the charging connector is connectable to a power supply cable.

8. A work machine comprising the control system according to claim 6.

9. The work machine according to claim 8, further comprising the lock mechanism and a cover member that covers the accessed portion in an openable/closable manner,
wherein the cover member includes an opening portion through which a member that makes access to the accessed portion passes.
